# EUROPÄISCHE PATENTSCHRIFT

(11) **EP 0 349 931 B1**
(45) Veröffentlichungstag und Bekanntmachung des Hinweises auf die Patenterteilung: **06.04.1994**
(21) Anmeldenummer: 89112021.4
(22) Anmeldetag: 01.07.1989
(51) Int. Cl.: H01B 15/00, B03B 9/06

(54) **Verfahren zur Auftrennung und Rückgewinnung der einzelnen Materialien aus Altkabeln**
Process for the separation and recovery of materials from scrap cables
Procédé de séparation et de récupération de matériaux de vieux câbles

(30) Priorität: 08.07.1988 DE 3823230
(43) Veröffentlichungstag der Anmeldung: 10.01.1990
(73) Patentinhaber: Maschinenfabrik Bezner GmbH & Co. KG, 88212 Ravensburg (DE)
(72) Erfinder: Kopp, Wilhelm, D-7983 Pfrungen (DE)
(74) Vertreter: Patentanwälte Eisele, Otten & Roth

(56) Entgegenhaltungen:
- DE-A- 3 442 941
- FR-A- 2 301 901
- GB-A- 1 523 229

## Beschreibung

Die Erfindung betrifft ein Verfahren zur Auftrennung und Rückgewinnung der einzelnen Materialen aus Altkabeln nach dem Oberbegriff des Anspruchs 1.

Altkabel fallen in großen Mengen bei der Erneuerung von Erdkabeln oder auch Überlandkabeln sowohl bei den Kommunen, bei Industriebetrieben oder bei Elektrizitätsgesellschaften an. Dabei können die Kabeldurchmesser durchaus 5 bis 10 cm betragen, wobei die Verwertung, d. h. die Rückgewinnung der einzelnen Kabelbestandteile besonders bei Kabeln mit einem Durchmesser von 2 cm und größer von Interesse ist. Derartige Kabel bestehen aus mehreren Einzelkabelsträngen, die litzenförmig mit einer Kupferlitze oder Aluminiumlitze oder als Massivkabel aufgebaut sind und die jeweils mit einem Kunststoff ummantelt sind. Dabei werden mehrere litzenförmige oder massive Kabelstränge zusammengefaßt und mit einer Kunststoff-und/oder Bleiummantelung umgeben. Das ganze Kabel kann dann nochmals mit einer Kunststoffummantelung versehen sein.

Aus der DE-OS 26 55 424 ist bereits ein Verfahren bekannt geworden, bei welchem die Kabel in einer Querebene sowie einer Längsebene durchtrennt und die so getrennten Einzelteile sortiert werden. Das komplette Durchschneiden aller umhüllten Schichten hat jedoch den Nachteil, daß die weitere Verarbeitung der Einzelteile aufwendig und ungenau ist.

Gemäß der DE-OS 34 12 044 ist eine Vorrichtung zur mechanischen Zerlegung von Kabeln bekannt geworden, die eine Ablängung in definierter Länge und eine Verarbeitung in einem Spezialschneidkopf vornimmt. Insbesondere wird eine Mantellängsschlitzvorrichtung in dieser bekannten Schrift vorgeschlagen, welche eine Auftrennung in die einzelnen inneren Bestandteile des Kabels ermöglicht. Durch ein nachfolgendes Schneidwerk werden die Kabel auf eine sortierbare Länge durchtrennt und die Einzelteile sortiert. Auch diese Vorrichtung hat den Nachteil, daß die Nachsortierung bei litzenförmigen Innenkabeln nur umständlich und unbefriedigend durchgeführt werden kann.

Ein ähnliches Verfahren ist in der DE-OS 35 29 322 aufgeführt, wobei die Kabelreste in einer Zerkleinerungsmaschine zu kleinen Teilen zerschnitten und die Zerlegung in ein loses Gemisch von Metall und Isoliermaterial erfolgt. Durch ein Gebläse wird das zerkleinerte Material in eine Trennanlage gefördert und mittels Wasserspülung nach Materialart sortiert. Dieses Verfahren hat den Nachteil, daß eine umständliche Trennmethode des zerkleinerten Materials verwendet wird, wobei insbesondere die Entsorgung des stark belasteten Wassers Probleme mit sich bringt.

Schließlich ist in der DE-OS 34 42 941 eine weitere Vorrichtung zum Auftrennen der Isolationshüllen von Kabeln, insbesondere von Kabelabfällen bekannt geworden, wobei gegenläufig rotierbare Walzen mit Führungs- und Transportrillen für das Kabel vorgesehen sind, wobei eine Messerscheibe die Kabel aufschlitzt. Auch diese Vorrichtung löst das Problem der Wiederverwertung von Kabelabfällen nur unzureichend, da aufgeschlitzte Kabel schlecht sortierbar und transportierbar sind.

Aus der FR-A- 2 301 901 ist eine weitere Vorrichtung zur Behandlung und Rückgewinnung von elektrischen Kabeln bekannt geworden, die der Gattung des Anspruchs 1 entspricht. Auch diese Vorrichtung hat jedoch den Nachteil, daß nur eine unzureichende Auftrennung der Kabelbestandteile erzielbar ist.

Der Erfindung liegt die Aufgabe zugrunde, ein Verfahren zur Rückgewinnung und Auftrennung der einzelnen Bestandteile von Altkabeln vorzuschlagen, wobei eine vollständige Auftrennung und Zerlegung in die einzelnen Bestandteile in handhabbarer Größe erfolgt.

Diese Aufgabe wird ausgehend von einem Verfahren nach dem Oberbegriff des Anspruchs 1 durch die Merkmale des kennzeichnenden Teils des Anspruchs 1 gelöst.

Durch die Unteransprüche sind vorteilhafte Weiterbildungen und Verbesserungen der einzelnen Verfahrensschritte nach dem Hauptanspruch möglich.

Die Erfindung wird anhand des Zeichnungsblattes mit einer prinzipiellen Darstellung der einzelnen Verfahrensschritte näher beschrieben.

Es zeigen:
- Fig. 1: eine schematische Darstellung des zu behandelnden Kabels ,
- Fig. 2: einen unsortierten Kabel-Haufen als Ausgangsprodukt,
- Fig. 3: eine sortierte Kabelmenge
- Fig. 4: eine Zerkleinerungsanlage,
- Fig. 5: eine Kabelmantelaufschlitzmaschine,
- Fig. 6: ein aufgeschlitztes Kabel,
- Fig. 7: eine aufgeschlitzte Kabelummantelung zur Weiterverarbeitung,
- Fig. 8: eine Messermühle,
- Fig. 9: einen Scheibenzerkleinerer,
- Fig. 10: ein zerkleinertes Scheibchen,
- Fig. 11: eine Transportvorrichtung für zerkleinerte Scheibchen,
- Fig. 12: eine Vibrationseinrichtung,
- Fig. 13: eine nachgeschaltete Messermühle.

### Beschreibung eines Ausführungsbeispiels:

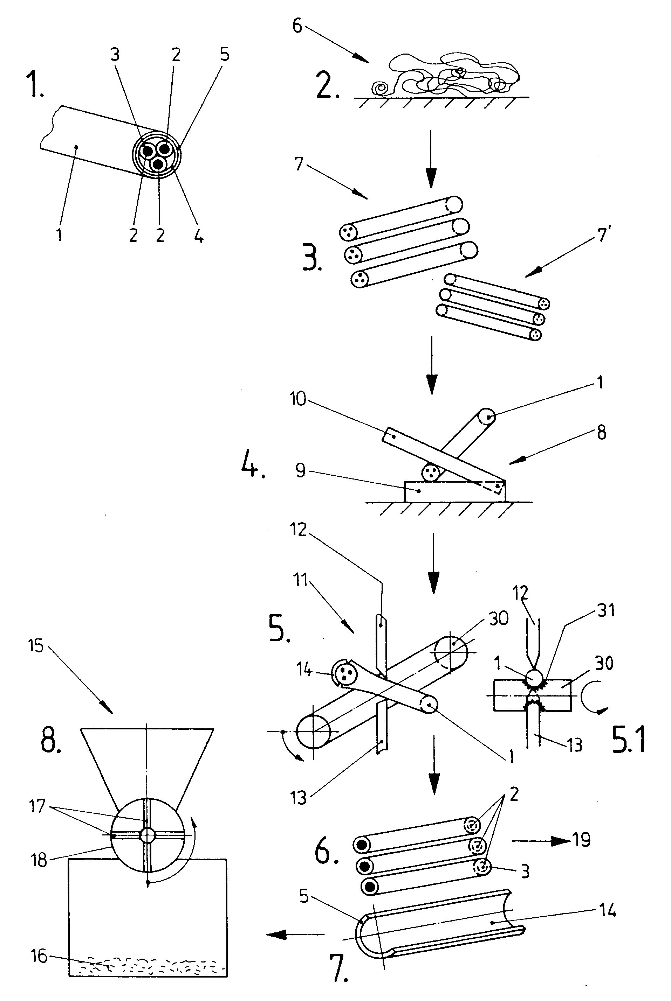

Die Art der zu sortierenden Kabeln ist aus der Literatur hinreichend bekannt. Als Beispiel ist in der Figur 1 ein Altkabel 1 gezeigt, welches beispielsweise drei litzenförmige Kupfer- oder Aluminiumseelen 2 aufweist, die jeweils einzeln mit einem Polyäthylenmantel (PE) 3 überzogen sind. Um diese drei Einzelseelen 2 kann ein weiterer Kunststoffmantel 4 vorgesehen sein, z. B. ebenfalls aus Polyäthylen oder PVC. Dieser Mantel 4 kann jedoch auch eine Bleiummantelung zur Abschirmung sein. Das ganze ist dann wiederum mit einem letzten äußeren Mantel 5 z. B. aus PVC umgeben.

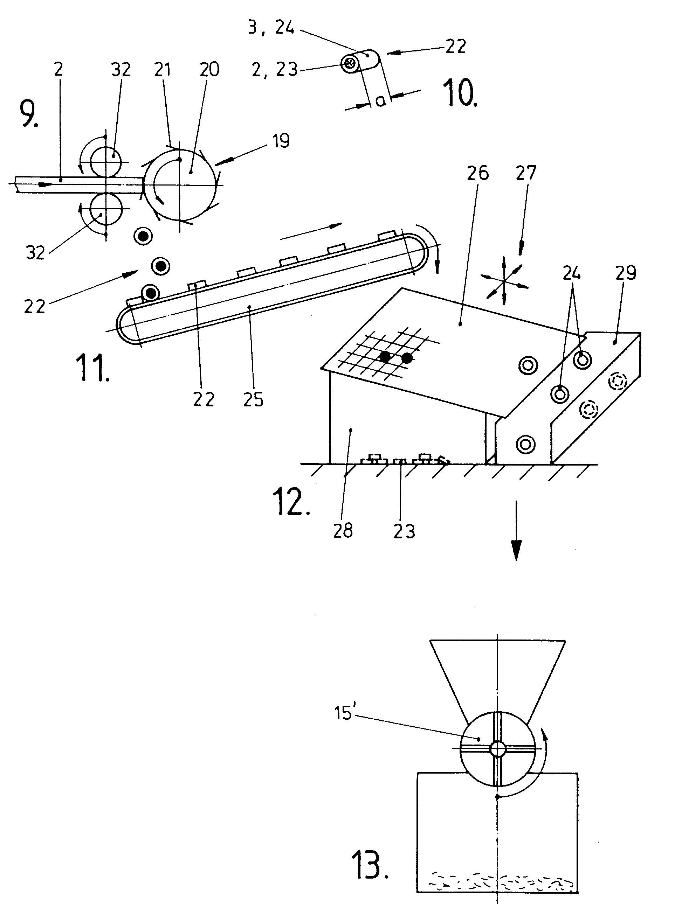

Derartige Kabel liegen in größeren Mengen und in unterschiedlichsten Dicken vor, wobei die Kabel in unsortierten Anhäufungen 6 mit den unterschiedlichsten Zusammensetzungen vorliegen. (Fig. 2) Insbesondere können die Kabel ölgetränkte Innenummantelungen aufweisen, die ebenfalls bei der Verarbeitung berücksichtigt werden müssen.

Zunächst wird das Kabelgemisch 6 in die einzelnen Kabelsorten 7, 7' nach ihrer Beschaffenheit sortiert (Fig. 3), um beispielsweise Aluminium- und Kupferseelen 2 oder PVC- von PE-Außen-Ummantelungen 5 zu trennen. Danach werden die sortierten Kabel 7 in einer Zerkleinerungsmaschine 8, die nach Art einer Schere mit einem stehenden Messer 9 und einem Scherenmesser 10 arbeitet, auf einzelne Kabelabschnitte in der Größenordnung von 50 bis 100 cm abgelängt. (Fig. 4) Diese Ablängung dient zur leichteren Weiterverarbeitung der sonst etwas verschlungenen und gekrümmten Einzelkabel.

In einer danach folgenden Kabelmantel-Aufschlitzmaschine 11 (Fig. 5) wird der äußere Kabelmantel 5 von einem oberen 12 und einem unteren Messer 13 in zwei Kabelhälften 14 aufgeschlitzt. (Fig. 5.1) Diese aufgeschlitzten Kabelmäntel (Fig. 7) aus einer bestimmten Kunststoffsorte, z. B. PVC, werden dann in einer nachfolgenden Messermühle 15 (Fig. 8) zu Kunststoffgranulat 16 zerkleinert. Die Messermühle enthält ein oder mehrere innen umlaufende Messer 17, die das zu zerkleinernde Kunststoffmaterial solange durchschlagen, bis die Teile durch den als Sieb ausgebildeten Mantel 18 hindurch fallen. Auf diese Weise kann ein Granulat mit bestimmter Größe aus einer Kunststoffsorte hergestellt werden, d. h. der äußere Kunststoffmantel wird als reines Kunststoffgranulat zurückgewonnen.

Durch die Kabelmantel-Aufschlitzmaschine 11 wird demnach der äußere Mantel 5 des Altkabels aufgeschlitzt. Hervor treten mehrere Seelen 2 aus Kupfer- oder Aluminiumlitzen, die wiederum mit einer Kunststoffummantelung 3 (z. B. PE) umgeben sind (s. Kabelquerschnitt) . (Fig. 6) Diese weitere Kunststoffummantelung wird jedoch nicht nochmals aufgeschlitzt. Vielmehr werden diese kunststoffummantelten Kabel einem nachfolgenden Scheibenzerkleinerer 19 über ein angetriebenes Riffelwalzenpaar 32 zugeführt. (Fig. 9)
Der Scheibenzerkleinerer weist eine mit sehr hoher Drehzahl rotierende Scheibenwalze 20 mit tangential hervorstehenden Messer 21 auf, die das Kabel 2 einschließlich der Kunststoffummantelung 3 scheibenartig aufschneidet. (Fig. 10) Dieses salamiartige Aufschneiden führt zu runden Kunststoffscheiben 22 mit einer Vielzahl im Inneren befindlichen Kabelstiften 23 und einem äußeren Kunststoffring 24. Die Kabelstifte 23 werden durch die abgeschnittenen Litze 2, der Kunststoffring 24 durch die, die Litze umgebende Isolierung 3 gebildet. Diese Kunststoffscheibe 22 und damit die Einzeldrähte oder Kabelstifte 23 weisen eine Länge von ca. 3 bis 5 mm auf. Diese Länge muß relativ klein gehalten werden, damit eine nachfolgende Auftrennung der Kabelstifte 23 vom darumliegenden Kunststoffring 24 erfolgen kann. Der Scheibenzerkleinerer 19 kann auch als Hackscheibe, Wellenzerkleinerer o. dgl. bezeichnet werden. Er ist grundsätzlich aus anderen Anwendungsgebieten, insbesondere der Holzzerkleinerung bekannt. Der Scheibenzerkleinerer dreht sich mit hoher Drehzahl und einer Schwungmasse, um die relativ dicken Kabel scheibchenweise durchtrennen zu können.

Die so abgeschnittenen Kabelscheiben bzw. Kunststoffscheiben 22 werden über einen Förderer 25 (Fig. 11) auf ein Schwingsieb 26 (Fig. 12) transportiert, welches mit einer hochfrequenten Kurzschwingbewegung versehen ist. Diese Bewegungsart ist durch die Pfeile 27 angedeutet. Durch das Schwingsieb werden die inneren Kupfer- oder Aluminiumstifte 23 von der ringförmigen Kunststoffummantelung 24 getrennt, wobei die Kabelstifte 23 durch das Schwingsieb in den darunterliegenden Behälter 28 fallen, während die ringförmigen Kunststoffscheiben 24 in einen nachgeschalteten Behälter 29 gelangen. Diese Auftrennung der Kunststoffscheiben 22 ist nur dadurch möglich, weil die in der Länge a sehr kleinen Scheibchen 22 durch den Scheibenzerkleinerer 19 so kurz abgeschnitten werden, daß sich die Kabelstifte 23 durch Vibration leicht vom umgebenden Kunststoffring 24 lösen. Die reinen Kupfer- oder Aluminiumstifte 23 im Behälter 28 können dann infolge ihrer Reinheit zu sehr günstigen Preisen an die weiterverarbeitende Industrie gegeben werden. Gleiches gilt für die hergestellten einzelnen Kunststoffsorten. Hierzu können die im Behälter 29 anfallenden Kunststoffringe in dieser Form oder in nochmals zerkleinerter Form nachbearbeitet werden. Dies kann in einer weiteren Messermühle 15' erfolgen. (Fig. 13)
Die Erfindung sieht auch vor, daß der Scheibenzerkleinerer 19 Kabelsorten verarbeitet, wie sie eingangs der Beschreibung als Gesamtkabelzusammensetzung beschrieben sind, d. h. ein aus mehreren Seelen 2 bestehendes und mit mehreren verschiedenen Kunststoffummantelungen 3, 5 überzogenes Kabel. Dabei können die inneren Kabel 2 als massiv förmige Einzelkabelstränge oder als litzenförmige Metallkabel vorliegen. Durch die erfindungsgemäße Zerschneidung dieser Kabel in einzelne Ringe mit einer relativ kurzen Länge a und einer anschließenden Rüttelung dieser Ringe auf dem Rüttelsieb 26 zerfällt das Kabel in seine einzelne Bestandteile, die infolge des salamiartigen Aufschneidens jeweils unterschiedliche geometrische Formgebungen aufweisen. In diesem Fall kann dann durch mehrere hintereinander geschaltete Siebe 26 eine Auftrennung der einzelnen Kunststoffringe der jeweiligen Ummantelungen erfolgen.

Sofern das Kabel eine ölgetränkte Innenummantelung aufweist, kann auch dieses mit dem Scheibenzerkleinerer 19 bearbeitet werden. Ggf. müssen dann die Ringe einem zwischengeschalteten oder nachgeschalteten Waschvorgang unterzogen werden.

Die Erfindung ist nicht auf das dargestellte Ausführungsbeispiel beschränkt. Sie umfaßt auch vielmehr alle fachmännischen Weiterbildungen im Rahmen der Schutzrechtsansprüche.

## Patentansprüche

1. Verfahren zur Auftrennung und Rückgewinnung der einzelnen Materialien aus Altkabeln, bestehend aus mehreren, kunststoffummantelten und/oder metallummantelten Einzelkabeln aus Kabellitze oder Massivkabeln, wobei nachfolgende Verfahrensschritte durchgeführt werden:
- Sortierung der Kabel (7, 7') nach ihrer Beschaffenheit;
- ggf. Zerkleinerung (8) der Kabel in manuell handhabbare Stücke;
- Zuführung der Kabel zu einer Kabelmantelaufschlitzmaschine (11) zur Aufschlitzung und Entfernung der äußeren Kunststoffummantelung (5);
gekennzeichnet durch nachfolgende weitere Verfahrenschritte:
- Zuführung der kunststoff-ummantelten Einzeldrähte (2) mit innenliegender Kabellitze oder Massivkabel zu einem Scheibenzerkleinerer (19), der das Kabel scheibchenweise zerhackt, mit einer Scheibendicke (a) von 3 bis 10 mm;
- Zuführung der klein zerhackten Kabelscheiben (22) zu einem Schwingsieb (26) mit einer hochfrequenten Kurzschwingbewegung zur Trennung der Kabelstifte oder Litzenstifte (23) von dem diese umgebenden Kunststoff-Ummantelungsring (24);

2. Verfahren nach Anspruch 1, dadurch gekennzeichnet,
daß die Weiterverarbeitung der aufgeschlitzten Kunststoffummantelung (5, 14) in einer Messermühle (15) zu Kunststoffgranulat (16) erfolgt.

3. Verfahren nach Anspruch 1, dadurch gekennzeichnet,
daß die dem Schwingsieb (26) entnommenen Kunststoff-Ummantelungsringe (24) in einer nachgeschalteten Messermühle (15') behandelt werden.

4. Verfahren nach Anspruch 1, dadurch gekennzeichnet,
daß die Zerkleinerungsmaschine (8) nach Art eines scherenartigen Schneidmessers mit stehendem Messer (9) und Scherenmesser (10) arbeitet.

5. Verfahren nach Anspruch 1, dadurch gekennzeichnet,
daß die Kabelmantelaufschlitzmaschine (11) eine geriffelte Walze (30) mit einem U-förmigen Kabelaufnahmeprofil (31) aufweist, wobei der äußere Kabelmantel (5) von oben und unten durch zwei radial eingreifende Messer (12, 13) aufschlitzbar ist.

6. Verfahren nach Anspruch 1, dadurch gekennzeichnet,
daß der Scheibenzerkleinerer (19) aus einer umlaufenden Messerwalze (20) oder Scheibenwalze (20) mit hoher Schwungmasse und Drehzahl besteht und daß die Schneidmesser (21) tangential an der Walze angeordnet sind und daß das der Walze (20) radial zugeführte Kabel (2) scheibchenweise (22) zerkleinert wird, wobei die Scheibchen aus der Kabellitze gebildete innere Einzelstifte (23) und einen äußeren Kunststoffring (24) mit einer Länge von ca. 3 bis 10 mm aufweisen.

7. Verfahren nach Anspruch 6, dadurch gekennzeichnet,
daß die kontinuierliche Zuführung des Kabels (2) zum Scheibenzerkleinerer (19) mittels einer antreibbaren Riffelwalze (32) erfolgt.

## Claims

1. Method of separation and recuperation of the individual materials from old cables, consisting of several plastic-coated and/or metal-coated individual cables made of cable strands or solid cables, the following process steps being carried out:-
- sorting the cables (7,7') according to their suitability;
- if required, comminution (8) of the cables into manually manageable pieces;
- feeding the cables to a cable covering splitting machine (11) for splitting and removal of the outer plastic coating (5);
characterized by the following further process steps:
- feeding the plastic-coated individual wires (2) with internally lying cable strand or solid cable to a plate comminuter (19) which chops the cable into platelets with a platelet thickness (a) of 3 to 10 mm;
- feeding the finely chopped cable platelets (22) to a vibrating screen (26) with a high frequency rate of short vibratory movement for the separation of the cable pieces or strand pieces (23) from the plastic coating (24) surrounding them.

2. A method according to claim 1, characterized in that
the further processing of the split off plastic coating (5, 14) in a cutter mill (15) into plastic granules (16).

3. A method according to claim 1, characterized in that
the plastic coating rings (24) removed from the vibrating screen (26) are treated in a cutter mill (15') mounted downstream.

4. A method according to claim 1, characterized in that
the comminuting machine (8) operates in the manner of a scissor-like cutter blade with fixed knife (9) and scissors (10).

5. A method according to claim 1, characterized in that
the cable covering splitting machine (11) has a corrugated roller (30) with a channel-shaped cable receiving profile (31), the outer cable coating (5) being splittable from above and below by two radially engaging blades (12, 13).

6. A method according to claim 1, characterized in that
the plate comminuter (19) consists of a rotating cutter roller (20) or plate roller (20) of high centrifugal mass and speed, and in that the cutter blades (21) are arranged tangentially on the roller, and in that the cable (2) radially fed to the roller (20) is comminuted into platelets (22), the platelets formed from the cable strand having inner individual pieces (23) and an outer plastic ring (24) with a length of approximately 3 to 10 mm.

7. A method according to claim 6, characterized in that
the continuous feeding of the cable (2) to the plate comminuter (19) is effected by means of a drivable corrugated roller (32).

## Revendications

1. Procédé pour séparer et récupérer les matériaux individuels de câbles usagés, constitués de plusieurs câbles individuels enveloppés de matière synthétique et/ou de métal, constituant des câbles massifs ou des torons de câble, les étapes suivantes de procédé étant effectuées :
- triage des câbles (7,7') selon leur nature ;
- le cas échéant fragmentation (8) des câbles en morceaux qui peuvent être manipulés manuellement ;
- amenée des câbles à une machine (11) pour fendre et ôter l'enveloppe externe de matière synthétique (5) des câbles ;
caractérisé par les autres étapes de procédé suivantes :
- amenée des fils individuels enveloppés de matière synthétique (2) à toron ou câble massif interne à un dispositif de fragmentation (19), qui hache le câble en tranches, ayant une épaisseur (a) de 3 à 10 mm ;
- amenée des tranches de câble (22) finement hachées à un tamis vibrant (26) ayant un mouvement oscillant court à haute fréquence pour séparer les bouts de câble ou les bouts de toron (23) de la bague d'enveloppe de matière synthétique (24) entourant ceux-ci.

2. Procédé selon la revendication 1,
caractérisé en ce que le traitement ultérieur de l'enveloppe de matière synthétique fendue (5,14) est effectué dans un broyeur (15) pour former un granulat de matière synthétique (16).

3. Procédé selon la revendication 1,
caractérisé en ce que les bagues d'enveloppe de matière synthétique (24), évacuées du tamis vibrant (26), sont traitées dans un broyeur (15') disposé en aval.

4. Procédé selon la revendication 1,
caractérisé en ce que la machine de fragmentation (8) travaille comme un dispositif de coupe du type cisaille, comportant un couteau fixe (9) et une cisaille (10).

5. Procédé selon la revendication 1,
caractérisé en ce que la machine (11) pour fendre l'enveloppe du câble présente un rouleau cannelé (30) ayant un profil (31) en forme de U de réception du câble, l'enveloppe externe du câble (5) pouvant être fendue du haut et du bas par deux couteaux (12,13) agissant radialement.

6. Procédé selon la revendication 1,
caractérisé en ce que le dispositif de fragmentation (19) est constitué d'un rouleau de coupe (20) ou d'un rouleau à couteaux (20) rotatif, à vitesse de rotation et masse d'inertie élevées, et en ce que les couteaux (21) sont agencés tangentiellement au rouleau, et en ce que le câble (2) amené radialement au rouleau (20) est fragmenté en tranches (22), les tranches présentant des bouts individuels internes (23) formés à partir du toron du câble et une bague en matière synthétique externe (24) ayant une longueur d'environ 3 à 10 mm.

7. Procédé selon la revendication 6,
caractérisé en ce que l'amenée continue du câble (2) au dispositif de fragmentation (19) est effectuée au moyen d'un rouleau cannelé (32) qui peut être entraîné.
